# EUROPEAN PATENT APPLICATION

(11) **EP 4 809 807 A1**
(43) Date of publication of application: **23.09.2026**
(21) Application number: 25744455.4
(22) Date of filing: 09.01.2025
(51) Int. Cl.: A01D 34/00

(54) **SELF-PROPELLED LAWN MOWER, AND BOUNDARY ESTABLISHMENT METHOD FOR SELF-PROPELLED LAWN MOWER**

(30) Priority: 26.01.2024 CN 202410114668
(71) Applicant: Nanjing Chervon Industry Co., Ltd., Nanjing, Jiangsu 211106 (CN)
(72) Inventor: ZHANG, Zhishang, Nanjing, Jiangsu 211106 (CN); YAO, Surui, Nanjing, Jiangsu 211106 (CN); ZHAO, Dan, Nanjing, Jiangsu 211106 (CN); GAO, Hongchen, Nanjing, Jiangsu 211106 (CN)
(74) Representative: Sun, Yiming
(86) International application number: PCT/CN2025/071405
(87) International publication number: WO 2025/157011

(57) **Abstract**

Provided are a self-propelled mower and a boundary establishment method therefor. The self-propelled mower includes at least: a body; a traveling wheel assembly configured to support the body; a signal receiving unit configured to receive a signal sent by a first remote device to obtain external positioning data of the self-propelled mower; a first sensor assembly configured to detect environmental information around the self-propelled mower; a second sensor assembly configured to detect a motion state of the self-propelled mower; and a fusion positioning unit. The fusion positioning unit is configured to: position the self-propelled mower according to the environmental information and fuse the external positioning data to generate a first positioning result; position the self-propelled mower according to the motion state and fuse the external positioning data to generate a second positioning result; and fuse the first positioning result and the second positioning result to generate a final positioning result.

## Description

This application claims priority to Chinese Patent Application No. 202410114668.2 filed with the China National Intellectual Property Administration (CNIPA) on Jan. 26, 2024, the disclosure of which is incorporated herein by reference in its entirety.

### TECHNICAL FIELD

The present application relates to a mower, for example, a self-propelled mower and a boundary establishment method for the self-propelled mower.

### BACKGROUND

When a mower performs autonomous mowing, accuracy of a positioning result needs to be ensured such that mowing efficiency can be ensured. Therefore, it is difficult to ensure the accuracy of the positioning result simply based on a single sensor for positioning, and the accuracy of the positioning result of the self-propelled mower needs to be further improved.

In addition, the mower needs to construct a mowing map during the autonomous mowing. However, in the related art, the construction of the mowing map relies on manual control of the mower, which is inefficient and difficult to ensure safety.

When the mower mows grass, environmental obstructions may adversely affect a mowing task of the mower, and power supply to multiple sensors on the mower may adversely affect endurance of the mower.

This part provides background information related to the present application, and the background information is not necessarily the existing art.

### SUMMARY

An objective of the present application is to solve or at least alleviate part or all of the preceding problems. To this end, an objective of the present application is to provide a self-propelled mower and a boundary establishment method for a self-propelled mower.

To achieve the preceding objective, the present application adopts the technical solutions described below.

A self-propelled mower includes: a body; a traveling wheel assembly configured to support the body; a signal receiving unit configured to receive a signal sent by a first remote device to obtain external positioning data of the self-propelled mower; a first sensor assembly configured to detect environmental information around the self-propelled mower; a second sensor assembly configured to detect a motion state of the self-propelled mower; and a fusion positioning unit disposed on the body and electrically connected to the signal receiving unit, the first sensor assembly, and the second sensor assembly. The fusion positioning unit is configured to: position the self-propelled mower according to the environmental information and fuse the external positioning data to generate a first positioning result; position the self-propelled mower according to the motion state and fuse the external positioning data to generate a second positioning result; and fuse the first positioning result and the second positioning result to generate a final positioning result.

A self-propelled mower includes: a body; a traveling wheel assembly configured to support the body; a wireless communication module configured to perform communication with a second remote device, including receiving a control signal sent by the second remote device; a vision sensor configured to acquire image data around the self-propelled mower; and a controller, where the controller is electrically connected to the wireless communication module and the vision sensor respectively to acquire the control signal and the image data. The controller is configured to: calculate a movement route indicated by the control signal, control the traveling wheel assembly to cause the self-propelled mower to travel along the movement route, and store coordinate information of the movement route; identify a boundary between a grass region and a non-grass region from the image data based on deep learning, control the traveling wheel assembly to cause the self-propelled mower to travel along the boundary, and store coordinate information of the boundary; and integrate the coordinate information of the movement route and the coordinate information of the boundary to generate a working region boundary of the self-propelled mower.

A boundary establishment method for a self-propelled mower is provided. The self-propelled mower includes a wireless communication module and a vision sensor. The boundary establishment method includes: receiving, through the wireless communication module, a control signal sent by a second remote device; acquiring image data around the self-propelled mower through the vision sensor; calculating a movement route indicated by the control signal, controlling the self-propelled mower to travel along the movement route, and storing coordinate information of the movement route; when the control signal is absent, identifying a boundary between a grass region and a non-grass region from the image data, controlling the self-propelled mower to travel along the boundary, and storing coordinate information of the boundary; and integrating the coordinate information of the movement route and the coordinate information of the boundary to generate a working region boundary of the self-propelled mower.

A self-propelled mower includes: a body; a traveling wheel assembly configured to support the body; a signal receiving unit configured to receive a signal sent by a first remote device, where the signal is used for determining a position of the self-propelled mower; a vision sensor configured to acquire image data around the self-propelled mower; and a controller electrically connected to the signal receiving unit and the vision sensor respectively. The controller is configured to: receive the image data from the vision sensor; determine a signal quality of respective regions from the image data through a target detection algorithm; and adjust a positioning fusion algorithm or perform path planning according to the signal quality of respective regions.

A self-propelled mower includes: a body; a traveling wheel assembly configured to support the body; multiple sensor assemblies disposed on the body; a controller electrically connected to the multiple sensor assemblies respectively; and a power supply device disposed on the body and configured to supply power to the controller and the multiple sensor assemblies. The controller is configured to selectively cut off power supplied by the power supply device to at least one of the multiple sensor assemblies.

The present application has the benefits described below. 1. The external positioning data is respectively fused with the environmental information and the motion state for positioning. Then, the fusion results are further fused for final positioning. Positioning errors caused and accumulated by environments with sparse or irregular visual features, and positioning errors caused by inaccuracy of the motion state resulting from ground conditions when relying on a single motion state source are avoided. Data from multiple sensors is effectively fused so that positioning accuracy of the self-propelled mower is improved. 2. The boundary between the grass region and the non-grass region is visually identified, and a mowing map of the self-propelled mower is constructed in conjunction with the control signal from the second remote device, thereby improving efficiency and safety of mowing map construction. 3. Based on dual determination based on visual identification and the signal quality, the positioning fusion algorithm is adjusted or the path planning is performed for the self-propelled mower so that the self-propelled mower is guided to perform mowing tasks safely and efficiently. A more robust adjustment is performed on the positioning fusion algorithm according to a Real-Time Kinematic (RTK) working condition map, and a path is adjusted for the self-propelled mower, thereby improving mowing efficiency of the self-propelled mower and the safety of the self-propelled mower. 4. Different working conditions and tasks of the self-propelled mower are monitored, and power is supplied to different sensor assemblies according to the monitored different working conditions. Thus, the self-propelled mower can complete mowing tasks more efficiently for a long time, thereby achieving power saving and endurance functions of the self-propelled mower.

### BRIEF DESCRIPTION OF DRAWINGS

FIG. 1 is a structural view of a self-propelled mower according to an example of the present application.
FIG. 2 is a flowchart of a fusion positioning process configured in a fusion positioning unit according to an example of the present application.
FIG. 3 is a schematic diagram of architecture of a configuration method for a fusion positioning unit according to an example of the present application.
FIG. 4 is a flowchart of a working region boundary generation process configured in a controller according to an example of the present application.
FIG. 5 is a schematic diagram showing movement scenarios during construction of a map of a working region by a self-propelled mower according to an example of the present application.
FIG. 6 is a schematic diagram of a boundary establishment method for a self-propelled mower according to an example of the present application.
FIG. 7 shows a signal quality adjustment method configured in a controller according to an example of the present application.
FIG. 8 is a schematic diagram showing a signal quality determination method configured in a controller of a self-propelled mower according to an example of the present application.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

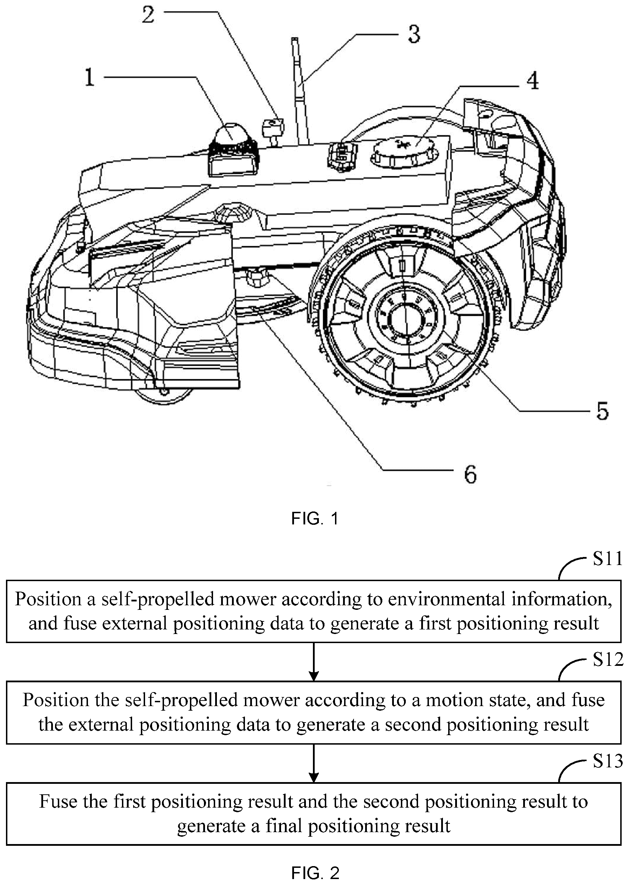

FIG.1 is a schematic view of a self-propelled mower according to an example of the present application. The self-propelled mower includes a laser radar 1, a first sensor assembly 2, a wireless communication module 3, a signal receiving unit 4, a traveling wheel assembly 5, and a working assembly 6. The first sensor assembly 2 is configured to detect environmental information around the self-propelled mower. In an example, the first sensor assembly 2 includes a vision sensor, for example, a camera assembly. The mower communicates with another remote device through the wireless communication module 3, such as a Bluetooth module, a cellular network, or a wireless fidelity (Wi-Fi) module. The signal receiving unit 4 is configured to receive a positioning signal, such as a global navigation satellite system (GNSS) receiver or a differential positioning unit. The traveling wheel assembly 5 is configured to drive the self-propelled mower to move. The working assembly 6 is configured to support a main working function of the self-propelled mower. For example, the working assembly 6 is a cutting deck for mowing grass. This example is applicable to the scenario in which positioning accuracy of the self-propelled mower is optimized. The optimization of the positioning accuracy is performed through a fusion positioning unit 7 in the self-propelled mower. This unit may be implemented in the form of a controller.

The self-propelled mower includes a body, and the traveling wheel assembly 5 is configured to support the body. The body of the self-propelled mower refers to a hardware portion for implementing a mowing function, and the traveling wheel assembly refers to components for supporting autonomous travel of the self-propelled mower.

The self-propelled mower further includes the signal receiving unit 4. The signal receiving unit 4 is configured to receive a signal sent by a first remote device to obtain external positioning data of the self-propelled mower. Specifically, after receiving the signal sent by the first remote device, the signal receiving unit 4 processes the signal to obtain the external positioning data. The external positioning data refers to position information acquired by the self-propelled mower by relying on the first remote device outside the mower, such as Global Positioning System (GPS) positioning data. For example, the first remote device is a satellite. After receiving a signal emitted by the satellite, the signal receiving unit calculates signal transmission time according to emission time of the signal and local time, then obtains a satellite-to-device distance in conjunction with the speed of light, and further determines the position information according to the satellite-to-device distance.

In some examples, the signal receiving unit 4 is the global navigation satellite system (GNSS) receiver. A global navigation satellite system (GNSS) is a navigation system that operates using multiple satellites, ground receivers, and related devices. The GNSS can determine information such as a geographic position, a speed, and time by receiving signals from satellites. The GNSS is mainly constituted by several main systems such as the Global Positioning System (GPS), Galileo, GLONASS, and the BeiDou Navigation Satellite System. The objective of these systems is to provide high-precision navigation positioning and auxiliary navigation services worldwide.

Specifically, the global navigation satellite system (GNSS) receiver is configured in the self-propelled mower to receive the signal from the satellite and determine the external positioning data of the self-propelled mower according to the signal from the satellite.

In some examples, the signal receiving unit 4 is a differential positioning unit, and the external positioning data is a differential positioning result of the self-propelled mower.

The differential positioning unit refers to an internal apparatus of the self-propelled mower to determine the external positioning data through a differential positioning method. The external positioning data obtained by the differential positioning unit by applying the differential positioning method to the signal is the differential positioning result. Specifically, the signal receiving unit acquires real-time kinematic (RTK) positioning data as the external positioning data by using an RTK method. RTK is a measurement method that can achieve centimeter-level positioning precision in real time in the wild.

The self-propelled mower further includes the first sensor assembly 2 configured to detect environmental information around the self-propelled mower. In some examples, the first sensor assembly 2 includes the camera assembly.

The camera assembly is configured in the first sensor assembly 2 to detect the environmental information around the self-propelled mower. That is, the first sensor assembly 2 is configured to acquire information in a visual dimension, detect the environmental information around the self-propelled mower through the information in the visual dimension, and may determine visual positioning data in the visual dimension through the information in the visual dimension. Specifically, the camera assembly includes a binocular camera.

The self-propelled mower further includes a second sensor assembly 8 configured to detect a motion state of the self-propelled mower. In some examples, the second sensor assembly 8 includes at least a wheel encoder.

The second sensor assembly 8 is configured with the wheel encoder to detect the motion state of the self-propelled mower. The wheel encoder is configured to acquire speed information of wheels in the traveling wheel assembly of the self-propelled mower and determine motion positioning data of the self-propelled mower based on the speed information of the wheels.

In some examples, the second sensor assembly 8 further includes an inertial measurement unit (IMU).

Specifically, the motion information may be acquired through the wheel encoder in the second sensor assembly 8, and the motion positioning data may be acquired according to the motion information. In addition, to improve accuracy of the motion positioning data, the IMU may also be disposed in the second sensor assembly 8, that is, the motion positioning data is determined in conjunction with data acquired by the wheel encoder and the IMU.

The self-propelled mower further includes the fusion positioning unit 7 disposed on the body. The fusion positioning unit 7 is electrically connected to the signal receiving unit 4, the first sensor assembly 2, and the second sensor assembly 8. A flowchart of a fusion positioning process configured in the fusion positioning unit 7 is shown in FIG. 2. The specific process includes the steps described below.

In S11, the self-propelled mower is positioned according to the environmental information, and the external positioning data is fused so that a first positioning result is generated.

In S12, the self-propelled mower is positioned according to the motion state, and the external positioning data is fused so that a second positioning result is generated.

In S13, the first positioning result and the second positioning result are fused so that a final positioning result is generated.

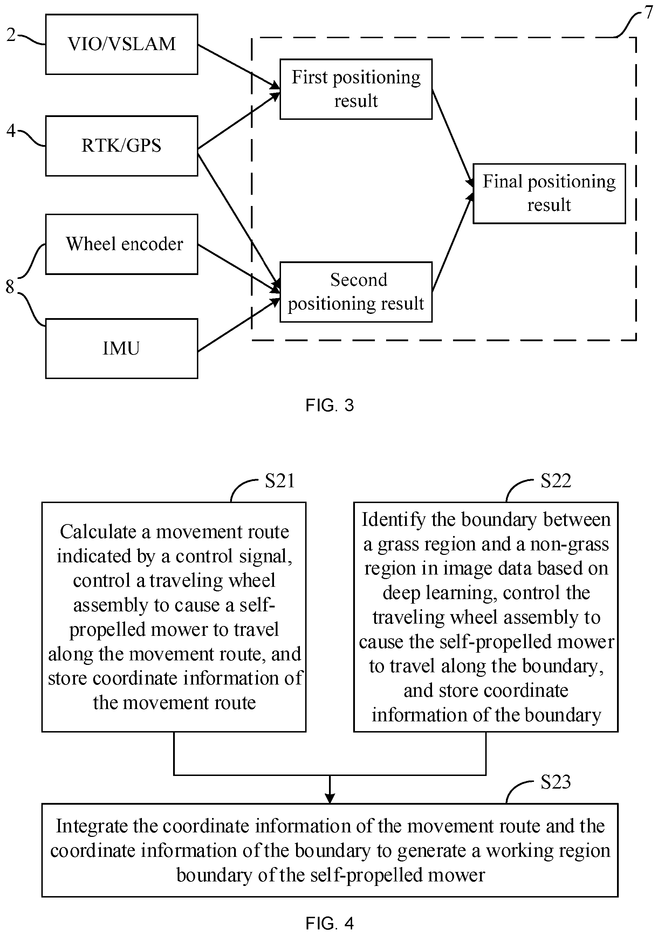

The fusion positioning unit is electrically connected to the signal receiving unit, the first sensor assembly, and the second sensor assembly to acquire and fuse the external positioning data, the environmental information, and the motion state to determine the final positioning result of the self-propelled mower. A schematic diagram of architecture of a configuration method for the fusion positioning unit is shown in FIG. 3.

In some examples, S11 in which the self-propelled mower is positioned according to the environmental information, and the external positioning data is fused so that the first positioning result is generated includes the step described below.

The self-propelled mower is positioned according to the environmental information, and the external positioning data is fused through Kalman filtering so that the first positioning result is generated.

Specifically, the environmental information includes image information acquired by the camera assembly. The visual positioning data of the self-propelled mower is determined according to the image information, and the visual positioning data and the external positioning data are fused through the Kalman filtering so that the first positioning result is generated.

For example, the environmental information is acquired through the camera assembly for visual simultaneous localization and mapping (VSLAM) positioning so that the visual positioning data is obtained. Then, the VSLAM positioning data and the RTK external positioning data are fused so that the vision-based first positioning result is determined.

In some other feasible examples, the image information may be acquired through the camera assembly in the first sensor assembly, and the visual positioning data may be acquired according to the image information. In addition, to improve accuracy of the visual positioning data, the inertial measurement unit (IMU) may also be disposed in the first sensor assembly. The inertial measurement unit is an apparatus that measures a three-axis attitude angle (or an angular rate) and acceleration of an object. Generally, one IMU includes three single-axis accelerometers and three single-axis gyroscopes. The accelerometers detect acceleration signals of an object on three independent axes of a coordinate system of a carrier. The gyroscopes detect signals of angular velocities of the carrier relative to a navigation coordinate system, to measure an angular velocity and acceleration of the object in a three-dimensional space, to calculate an attitude of the object.

The first sensor assembly includes the camera assembly and the IMU. The environmental information acquired by the vision sensor is combined with IMU data so that visual inertial odometry (VIO) of the self-propelled mower is obtained as the visual positioning data. The VIO uses visual odometry to estimate an attitude of the mower from camera images and corrects, in conjunction with an inertial measurement of the IMU of the body, an error in a rapid movement of the body caused by poor image capture, thereby obtaining the visual positioning data.

For example, the environmental information acquired through the camera assembly is fused with the IMU data so that the visual inertial odometry (VIO) of the self-propelled mower is obtained, and then the visual inertial odometry (VIO) and the RTK external positioning data are fused so that the vision-based first positioning result is determined.

In some examples, S12 in which the self-propelled mower is positioned according to the motion state, and the external positioning data is fused so that the second positioning result is generated includes the step described below.

The self-propelled mower is positioned according to the motion state, and the external positioning data is fused through Kalman filtering so that the second positioning result is generated.

Specifically, the motion state includes the speed information acquired by the wheel encoder. The motion positioning data of the self-propelled mower is determined according to the speed information, and the motion positioning data and the external positioning data are fused through the Kalman filtering so that the second positioning result is generated. The motion state includes the speed information acquired by the wheel encoder and inertial data acquired by the IMU. The motion positioning data is determined according to the speed information and the inertial data, and the motion positioning data and the external positioning data are then fused through the Kalman filtering so that the second positioning result is generated.

In some examples, S13 in which the first positioning result and the second positioning result are fused so that the final positioning result is generated includes the steps described below.

A fusion weight of the first positioning result and a fusion weight of the second positioning result are adjusted according to a visual positioning quality and/or a quality of the signal.

The first positioning result and the second positioning result are fused according to the fusion weight of the first positioning result and the fusion weight of the second positioning result so that the final positioning result is generated.

The first positioning result is visual positioning data, and accuracy of the first positioning result depends on the visual positioning quality. The second positioning result is motion positioning data, and the motion state and the external positioning data are fused in the second positioning result. Due to relative accuracy of the motion state acquisition, accuracy of the second positioning result mainly depends on accuracy of the external positioning data, that is, the accuracy of the second positioning result depends on the quality of the signal. Therefore, the fusion weight of the first positioning result and the fusion weight of the second positioning result are adjusted according to the visual positioning quality and/or the quality of the signal. The first positioning result and the second positioning result are fused according to the fusion weights through the Kalman filtering so that the final positioning result is obtained.

For example, if the visual positioning quality is greater than a first preset quality threshold, it is determined that the fusion weight of the first positioning result is greater than the fusion weight of the second positioning result, and if the quality of the signal is less than a preset signal threshold, it is determined that the fusion weight of the first positioning result is greater than the fusion weight of the second positioning result. Alternatively, if the visual positioning quality is less than a second preset quality threshold, it is determined that the fusion weight of the first positioning result is less than the fusion weight of the second positioning result, where the first preset quality threshold is greater than the second preset quality threshold. Moreover, specific proportions of the fusion weights may be dynamically adjusted according to a specific RTK signal quality and a specific visual positioning quality in an actual scenario and are not limited here.

This example has the beneficial effects described below. The external positioning data is respectively fused with the environmental information and the motion state for positioning. Then, the fusion results are further fused for final positioning. Positioning errors caused and accumulated by environments with sparse or irregular visual features, and positioning errors caused by inaccuracy of the motion state resulting from ground conditions when relying on a single motion state source are avoided. The data from the multiple sensors are effectively fused so that the positioning accuracy of the self-propelled mower is improved.

An example of the present application is another self-propelled mower, which may be combined with the self-propelled mower in the preceding example. FIG.1 is the schematic view of the self-propelled mower. This example is applicable to the scenario in which determination of a working region for mowing of the self-propelled mower is optimized. The determination of the working region for mowing is optimized through a controller in the self-propelled mower. This apparatus may be implemented in the form of software and/or hardware.

The self-propelled mower includes a body and a traveling wheel assembly. The traveling wheel assembly is configured to support the body. The body of the self-propelled mower refers to a hardware portion for implementing a mowing function, and the traveling wheel assembly refers to components for supporting autonomous travel of the self-propelled mower.

The self-propelled mower further includes a wireless communication module configured to perform communication with a second remote device, including receiving a control signal sent by the second remote device. The second remote device is configured to send the control signal to the wireless communication module of the self-propelled mower, so as to control the self-propelled mower to move. The second remote device may be a remote control device or the like. In some examples, the second remote device is a mobile terminal. A user may send the control signal to the self-propelled mower through the mobile terminal to remotely control the self-propelled mower to move.

The wireless communication module is located in the self-propelled mower and is configured to receive the control signal sent by the second remote device so that the self-propelled mower may move according to the control signal. In some examples, the wireless communication module includes at least one of the following: Bluetooth, Wi-Fi signal, or a cellular signal. Exemplarily, the user sends the control signal to the wireless communication module through the mobile device. After receiving the control signal in at least one of the following manners: Bluetooth, Wi-Fi, and the cellular signal, the wireless communication module controls, according to the control signal, the self-propelled mower to move.

The self-propelled mower further includes a vision sensor configured to acquire image data around the self-propelled mower. The vision sensor is deployed on the self-propelled mower and is configured to acquire the image data around the self-propelled mower in real time when the self-propelled mower moves. In some examples, the vision sensor includes a binocular camera. The self-propelled mower acquires the image data around the self-propelled mower through the binocular camera to improve coverage of the image data.

The self-propelled mower further includes a controller. The controller is electrically connected to the wireless communication module and the vision sensor respectively to acquire the control signal and the image data. FIG. 4 is a flowchart of a working region boundary generation process configured in the controller. The specific process includes the steps described below.

In S21, a movement route indicated by the control signal is calculated, the traveling wheel assembly is controlled to cause the self-propelled mower to travel along the movement route, and coordinate information of the movement route is stored.

In S22, a boundary between a grass region and a non-grass region from the image data is identified based on deep learning, the traveling wheel assembly is controlled to cause the self-propelled mower to travel along the boundary, and coordinate information of the boundary is stored.

In S23, the coordinate information of the movement route and the coordinate information of the boundary are integrated so that a working region boundary of the self-propelled mower is generated.

The controller on the self-propelled mower is configured to acquire the control signal received by the wireless communication module and the image data acquired by the vision sensor, so as to control, according to the control signal and the image data, the self-propelled mower to move.

Specifically, when the control signal is received, the movement route indicated by the control signal is calculated, the self-propelled mower is controlled to travel along the movement route, and the coordinate information of the movement route is stored. When the control signal is absent, the boundary between the grass region and the non-grass region from the image data is identified, the self-propelled mower is controlled to travel along the boundary, and the coordinate information of the boundary is stored. The coordinate information of the movement route and the coordinate information of the boundary are integrated so that the working region boundary of the self-propelled mower is generated.

At present, in the related art, mowing maps of self-propelled mowers are mostly constructed by manually controlling the mowers to map mowing regions. Such a method is time-consuming and cannot precisely represent the map. Therefore, this example proposes a semi-automatic map construction method that visually identifies a grass region and a non-grass region. Map boundaries are determined by identifying the grass region and the non-grass region and then are connected to form an effective mowing region. For example, the grass region and the non-grass region are identified based on deep learning. The grass region is a region where the self-propelled mower needs to mow grass. Therefore, the grass region is identified so that the mowing map can be formed. However, for a disconnected region, the control signal needs to be manually sent through the second remote device to remotely control the self-propelled mower to move to the next grass region. Alternatively, for a complex environment, the map may be constructed through manual control. This example ensures safety of mowing map construction and also improves efficiency of mowing map construction.

For example, when constructing the map of the working region, the self-propelled mower uses the vision sensor to capture images of lawn and uses the deep learning technology to identify grass regions and non-grass regions in the images. Deep learning is a machine learning technology, which may train neural networks to identify patterns and features in images. A deep learning model is trained to identify the grass regions and the non-grass regions in the lawn images and determine the boundaries between the grass regions and the non-grass regions. The deep learning model may be a convolutional neural network (CNN) that extracts the features from the lawn images and outputs a classification result. Each pixel is classified as a grass pixel or a non-grass pixel, and the boundary is determined by determining a boundary of the grass pixel and a boundary of the non-grass pixel.

After a boundary in image data currently acquired by the vision sensor is determined, the self-propelled mower is controlled to travel along the boundary. Specifically, the self-propelled mower is controlled to move and travel along the boundary, and information about a path traveled by the self-propelled mower is recorded during the travel. The information about the path may include coordinates of a start point, an end point, and each point on the path traveled by the self-propelled mower. The coordinate information may be determined by using built-in sensors of the self-propelled mower or acquired through an external positioning system. For example, the coordinate information is acquired by using the fusion positioning method in the preceding example. In some examples, the self-propelled mower further includes a differential positioning unit configured to acquire the coordinate information. In some examples, the self-propelled mower further includes a sensor assembly configured to acquire the coordinate information. Specifically, reference is made to the preceding example, and the details are not repeated here.

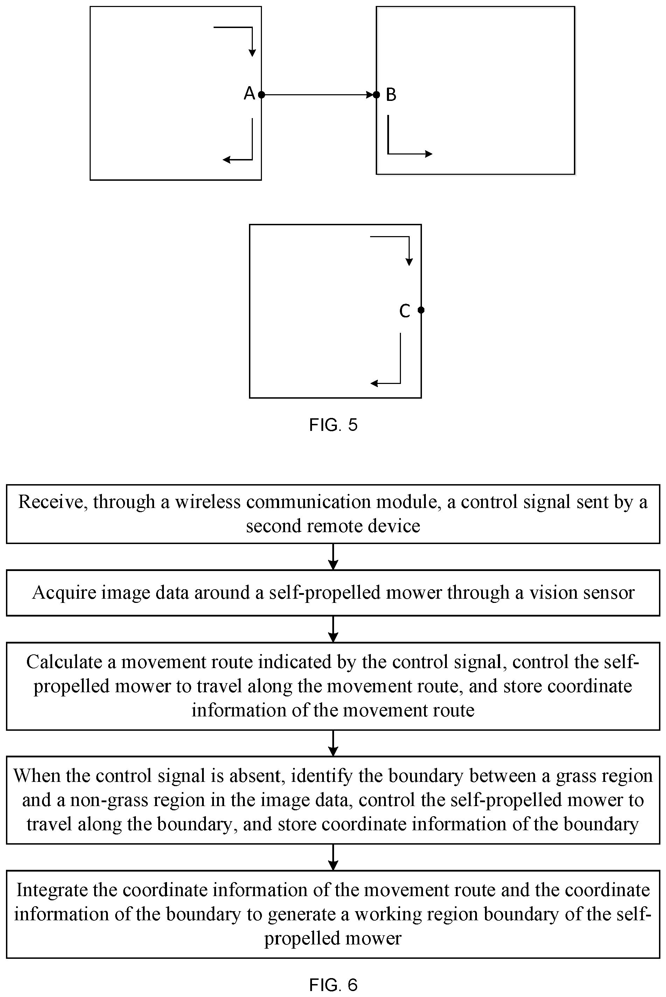

During the travel along the boundary acquired by the self-propelled mower in a movement process, if the boundary is closed, a virtual channel is constructed through the control signal, and the self-propelled mower is controlled to move to the next patch of lawn. The self-propelled mower autonomously identifies a boundary between the grass region and the non-grass region again through the image data and continues constructing the map. Specifically, when the self-propelled mower has traveled along the boundary on a patch of lawn for one complete loop, the boundary becomes closed. In this case, the virtual channel is constructed through the second remote device (for example, the self-propelled mower is remotely controlled through a remote controller or an APP) such that the self-propelled mower is controlled through the control signal to move from the current lawn to the next patch of lawn. On the new patch of lawn, the self-propelled mower may again autonomously identify the grass region and the non-grass region and continue constructing the map of the working region. FIG. 5 is a schematic diagram showing movement scenarios during the construction of the map of the working region by the self-propelled mower. In the movement scenarios shown in the upper half of FIG. 5, the self-propelled mower starts from point A on the left lawn, autonomously identifies a boundary according to the image data, and moves along the direction indicated by the arrows. When the self-propelled mower returns to point A, the boundary is closed. In this case, a virtual channel between point A and point B on the right lawn is constructed through the second remote device, and the self-propelled mower is controlled through the control signal to travel from point A of the current lawn to point B of the next patch of lawn and continue constructing the map of the working region. In the movement scenario shown in the lower half of FIG. 5, the self-propelled mower starts from point C on the lawn, autonomously identifies a boundary according to the image data, and moves along the direction indicated by the arrows. When the self-propelled mower returns to point C, the boundary is closed. After it is determined that no additional patch of lawn requires construction, the autonomous construction of the map of the working region is completed.

In some examples, the step in which the coordinate information of the movement route and the coordinate information of the boundary are integrated so that the working region boundary of the self-propelled mower is generated includes the step described below.

If the coordinate information of the boundary is located in a preset region, and the preset region includes the coordinate information of the movement route, the working region boundary of the self-propelled mower in the preset region is generated based on the coordinate information of the movement route.

The preset region refers to a region with a complex environment, such as a lawn boundary region with a relatively complex surrounding environment. For example, a large number of trees, buildings, and other obstacles exist in the lawn boundary region. Alternatively, one patch of lawn is shared by the user and a neighbor and cannot be distinguished through the grass region and the non-grass region. In this case, the self-propelled mower may be incapable of autonomously and completely identifying the boundary. Therefore, the working region boundary in the preset region needs to be determined through the control signal sent by the second remote device.

For example, when the complex environment is encountered, manual intervention is performed to construct a map of the complex environment. After the construction is completed, switchover to the autonomous grass and non-grass identification state is performed again. The manual intervention (for example, the self-propelled mower is remotely controlled through the remote controller or the APP) helps the self-propelled mower construct the map. When the construction of the map of the complex environment is completed, the switchover to the autonomous identification state of the self-propelled mower is performed again.

Specifically, when it is detected that the self-propelled mower is located in the preset region, control request information is sent to the second remote device. If the control signal sent by the second remote device is received, the movement route indicated by the control signal is calculated, the traveling wheel assembly is controlled to cause the self-propelled mower to travel along the movement route, the coordinate information of the movement route is stored, and the working region boundary of the self-propelled mower in the preset region is generated based on the coordinate information of the movement route. If the control signal sent by the second remote device is not received in a preset time period, the boundary between the grass region and the non-grass region from the image data is identified based on the deep learning, the traveling wheel assembly is controlled to cause the self-propelled mower to travel along the boundary, the coordinate information of the boundary is stored, and the working region boundary of the self-propelled mower in the preset region is generated based on the coordinate information of the boundary.

In some examples, the self-propelled mower further includes a memory. The memory is configured to store the coordinate information of the movement route, the coordinate information of the boundary, and the working region boundary.

After obtaining the coordinate information of the movement route, the coordinate information of the boundary, and the working region boundary, the information is stored in the memory so that it is convenient to subsequently generate the mowing map and query the information.

In some examples, the self-propelled mower sends the working region boundary to the second remote device through the wireless communication module.

After the working region boundary is determined, the working region boundary is sent to the second remote device so that the user may view and confirm the working region boundary on the second remote device. If it is determined that the working region boundary includes an inaccurate portion, the inaccurate portion is reconstructed.

In some examples, the step in which the coordinate information of the movement route and the coordinate information of the boundary are integrated includes the step described below.

Smoothing and gap filling are performed on the coordinate information of the movement route and the coordinate information of the boundary.

Since the coordinate information of the movement route and the coordinate information of the boundary are acquired during the travel of the self-propelled mower, the coordinate information of the movement route and the coordinate information of the boundary are discontinuous to a certain degree. To ensure continuity and smoothness of the finally generated working region boundary, the smoothing and the gap filling are performed on the coordinate information of the movement route and the coordinate information of the boundary.

When all the mowing regions are closed, a working region boundary map for mowing of the self-propelled mower is automatically generated according to travel path information of the self-propelled mower. The travel path information includes the coordinate information of the movement route and the coordinate information of the boundary. For example, when all the lawns have been enclosed by a travel path of the self-propelled mower, the smoothing and the gap filling are performed according to the travel path to automatically generate the working region boundary map for mowing of the self-propelled mower. The working region boundary map may display a travel path of the self-propelled mower on each patch of lawn, mowing order, and other information. According to the working region boundary map, the self-propelled mower may autonomously perform mowing tasks.

This example has the beneficial effects described below. The boundary between the grass region and the non-grass region is visually identified, and the mowing map of the self-propelled mower is constructed in conjunction with the control signal from the second remote device, thereby improving the efficiency and safety of mowing map construction.

FIG. 6 is a schematic diagram of a boundary establishment method for a self-propelled mower according to an example of the present application. This example is applicable to the scenario in which determination of a working region for mowing of the self-propelled mower is optimized. The method may be performed by a boundary establishment apparatus of the self-propelled mower. The apparatus may be implemented in the form of software and/or hardware and integrated into an electronic device. The electronic device involved in this example may be a server or another device with a computing capability.

The self-propelled mower includes a wireless communication module and a vision sensor. The boundary establishment method includes the steps described below.

A control signal sent by a second remote device is received through the wireless communication module.

Image data around the self-propelled mower is acquired through the vision sensor.

A movement route indicated by the control signal is calculated, the self-propelled mower is controlled to travel along the movement route, and coordinate information of the movement route is stored.

When the control signal is absent, a boundary between a grass region and a non-grass region from the image data is identified, the self-propelled mower is controlled to travel along the boundary, and coordinate information of the boundary is stored.

The coordinate information of the movement route and the coordinate information of the boundary are integrated so that a working region boundary of the self-propelled mower is generated.

In some examples, the second remote device is a mobile terminal.

In some examples, the wireless communication module includes at least one of the following: Bluetooth, Wi-Fi signal, and a cellular signal.

In some examples, the vision sensor includes a binocular camera.

In some examples, the self-propelled mower further includes a memory. The memory is configured to store the coordinate information of the movement route, the coordinate information of the boundary, and the working region boundary.

In some examples, the self-propelled mower sends the working region boundary to the second remote device through the wireless communication module.

In some examples, the step in which the coordinate information of the movement route and the coordinate information of the boundary are integrated includes the step described below.

Smoothing and gap filling are performed on the coordinate information of the movement route and the coordinate information of the boundary.

In some examples, the step in which the coordinate information of the movement route and the coordinate information of the boundary are integrated so that the working region boundary of the self-propelled mower is generated includes the step described below.

If the coordinate information of the boundary is located in a preset region, and the preset region includes the coordinate information of the movement route, the working region boundary of the self-propelled mower in the preset region is generated based on the coordinate information of the movement route.

In some examples, the self-propelled mower further includes a differential positioning unit configured to acquire the coordinate information.

In some examples, the self-propelled mower further includes a sensor assembly configured to acquire the coordinate information.

The boundary establishment method for the self-propelled mower provided in the example of the present application may be performed as any of the methods performed by and configured in the controller in the self-propelled mower provided in the preceding examples of the present application, and has the corresponding functional modules and beneficial effects.

An example of the present application is another self-propelled mower that may be combined with the self-propelled mower in the preceding example. FIG.1 is the schematic view of the self-propelled mower. This example is applicable to the scenario in which a working mode of the self-propelled mower is optimized. The working mode includes a positioning fusion algorithm or path planning. The optimization of the working mode of the self-propelled mower is performed by a controller in the self-propelled mower, and the apparatus may be implemented in the form of software and/or hardware.

The self-propelled mower includes a body and a traveling wheel assembly, and the traveling wheel assembly is configured to support the body. The body of the self-propelled mower refers to a hardware portion for implementing a mowing function, and the traveling wheel assembly refers to components for supporting autonomous travel of the self-propelled mower.

The self-propelled mower further includes a signal receiving unit configured to receive a signal sent by a first remote device. The signal is used for determining a position of the self-propelled mower. The signal receiving unit is configured in the self-propelled mower and is configured to receive position information of the self-propelled mower sent by the external first remote device. Specifically, the first remote device acquires the position information of the self-propelled mower in real time and sends a signal to the signal receiving unit in the self-propelled mower according to the position information. After receiving the signal sent by the first remote device, the signal receiving unit processes the signal to obtain the position of the self-propelled mower. The position of the self-propelled mower refers to the position information acquired by the self-propelled mower by relying on the first remote device outside the mower, such as GPS positioning data.

In some examples, the signal receiving unit is a global navigation satellite system (GNSS) receiver. A global navigation satellite system (GNSS) is a navigation system that operates using multiple satellites, ground receivers, and related devices. The GNSS can determine information such as a geographic position, a speed, and time by receiving signals from satellites. The GNSS is mainly constituted by several main systems such as the Global Positioning System (GPS), Galileo, GLONASS, and the BeiDou Navigation Satellite System. The objective of these systems is to provide high-precision navigation positioning and auxiliary navigation services worldwide.

Specifically, the global navigation satellite system (GNSS) receiver is configured in the self-propelled mower to receive a signal from a satellite and determine external positioning data of the self-propelled mower according to the signal from the satellite.

In some examples, the signal receiving unit is a differential positioning unit, and the position of the self-propelled mower is a differential positioning result of the self-propelled mower.

The differential positioning unit refers to an internal apparatus of the self-propelled mower to determine the external positioning data through a differential positioning method. The position of the self-propelled mower obtained by the differential positioning unit by applying the differential positioning method to the signal is the differential positioning result. Specifically, the signal receiving unit acquires real-time kinematic (RTK) positioning data as the position of the self-propelled mower by using an RTK method. RTK is a measurement method that can achieve centimeter-level positioning precision in real time in the wild.

The self-propelled mower further includes a vision sensor configured to acquire image data around the self-propelled mower. The vision sensor is deployed on the self-propelled mower and is configured to acquire the image data around the self-propelled mower in real time when the self-propelled mower moves. In some examples, the vision sensor includes a binocular camera. The self-propelled mower acquires the image data around the self-propelled mower through the binocular camera to improve coverage of the image data.

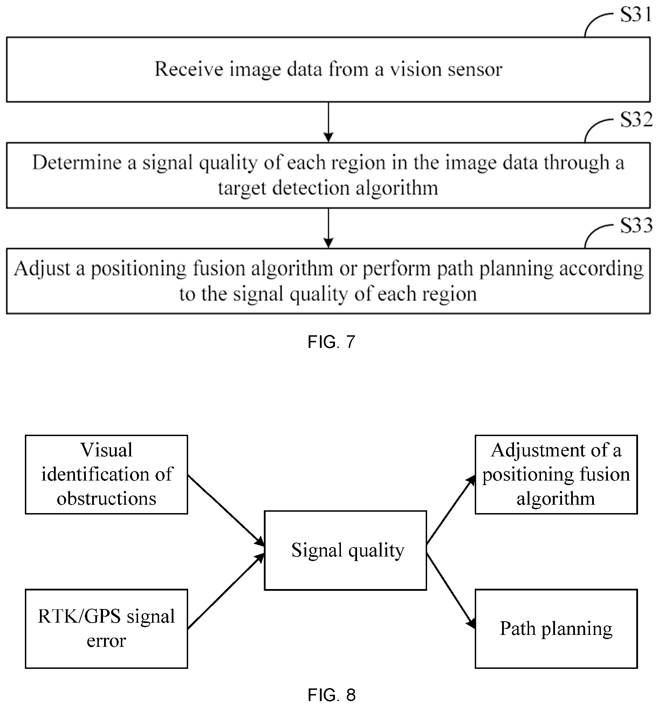

The self-propelled mower further includes the controller electrically connected to the signal receiving unit and the vision sensor respectively. A signal quality adjustment method configured in the controller is shown in FIG. 7, and the specific process includes the steps described below.

In S31, the image data is received from the vision sensor.

In S32, a signal quality of respective regions from the image data is determined through a target detection algorithm.

In S33, the positioning fusion algorithm is adjusted or the path planning is performed according to the signal quality of respective regions.

In some examples, the step in which the signal quality of respective regions from the image data is determined through the target detection algorithm includes the step described below.

Obstructions are detected through the target detection algorithm, and the signal quality of respective regions from the image data is determined according to the number, volumes, and/or heights of the obstructions.

An environment with large-area and low-height obstacles may significantly affect signals received by the signal receiving unit. Therefore, to ensure accuracy with which the position of the self-propelled mower is determined by using the received signal sent by the first remote device, it is necessary to first ensure the quality of the signal. Specifically, the signals received by the signal receiving unit may include satellite signals and radio signals from RTK base stations. The two types of signals are significantly affected by the obstructions.

Environmental image data is acquired through the vision sensor. Obstruction features are identified through the target detection algorithm in an image processing technique, and information such as the volumes, heights, number, and coverage areas of the obstructions is extracted. The target detection algorithm may be implemented through steps such as image segmentation, edge detection, and feature extraction, which are common technical means for those skilled in the art. The detailed algorithm is not described here.

Based on the extracted parameters of the obstructions, such as the number, volumes, and/or heights of the obstructions, it is determined whether the obstructions may affect the signal received by the signal receiving unit. If the obstructions are relatively large or high, the obstructions may obstruct satellite signals. If the obstructions cover relatively large areas, the obstructions may affect signal propagation. Therefore, the signal quality of respective regions from the image data is determined according to the number, volumes, and/or heights of the obstructions. For example, a mapping relationship between different ranges of the number, volumes, and/or heights of the obstructions and the signal quality is established in advance. Based on the mapping relationship, the corresponding signal quality of respective regions is obtained according to the number, volumes, and/or heights of obstructions in respective regions. A specific level correspondence in the mapping relationship may be determined according to the actual scenario and is not limited here.

In some examples, the step in which the positioning fusion algorithm is adjusted according to the signal quality of respective regions includes the step described below.

If a signal quality of a target region is less than a preset signal threshold, a fusion weight of a satellite positioning method in the positioning fusion algorithm is reduced.

The signal received by the signal receiving unit from the first remote device is used for determining the position of the self-propelled mower. Therefore, if the signal quality of the target region is less than the preset signal threshold, a received signal in the region may be inaccurate. Accordingly, the position of the self-propelled mower determined only according to the signal may be inaccurate. If the position of the self-propelled mower is determined based on the positioning fusion algorithm, to ensure accuracy of a fusion positioning result, the fusion weight of position information determination according to the signal needs to be reduced.

For example, a position determination method for the self-propelled mower adopts the positioning fusion algorithm. The multi-sensor fusion algorithm in the preceding example may be used as the positioning fusion algorithm. Alternatively, the satellite positioning method combined with other sensor-based positioning methods may be used as the positioning fusion algorithm. If the signal quality of the target region is less than the preset signal threshold, the fusion weight of the satellite positioning method in the positioning fusion algorithm is reduced, and a fusion weight of the other sensor-based positioning methods is increased. A specific reduction ratio may be determined according to the actual scenario and is not limited here.

In some examples, the positioning fusion algorithm further includes a positioning method using data from at least one of vision, a laser radar, a radar, a wheel encoder, and an IMU.

The other sensor-based positioning methods in the positioning fusion algorithm adopt the positioning method using data from at least one of vision, a laser radar, a radar, a wheel encoder, and an IMU.

In some examples, the step in which the path planning is performed according to the signal quality of respective regions includes the step described below.

If the self-propelled mower enters the target region, and the signal quality of the target region is less than the preset signal threshold, a path is adjusted, and the self-propelled mower is controlled to leave the target region and enter another region whose signal quality is greater than or equal to the preset signal threshold.

When the self-propelled mower enters the target region whose signal quality is less than the preset signal threshold, to ensure safety of the self-propelled mower, the self-propelled mower needs to be controlled to leave the target region as soon as possible and enter another region having a relatively high signal quality, that is, another region whose signal quality is greater than or equal to the preset signal threshold. In some examples, to ensure a mowing coverage rate of a region having a relatively low signal quality, an appropriate path may be planned such that the self-propelled mower alternately enters and exits the region with relatively poor signals and a region with relatively good signals, thereby reducing a working duration in the region with relatively poor signals. For example, the self-propelled mower may enter the region with relatively poor signals in a direction perpendicular to a long side of the region with relatively poor signals and perform S-shaped mowing.

For example, when the self-propelled mower works at night, the vision sensor cannot accurately identify the obstructions, and therefore, the self-propelled mower needs to avoid the target region having relatively poor signal quality performance and adopts corresponding obstacle avoidance strategies to ensure the safety of the self-propelled mower.

In some examples, the step in which the positioning fusion algorithm is adjusted or the path planning is performed according to the signal quality of respective regions includes the steps described below.

A global signal map is generated according to the signal quality of respective regions.

The positioning fusion algorithm is adjusted or the path planning is performed according to the global signal map.

Obstruction parameter analysis is performed on the obstructions in conjunction with the vision sensor to determine the signal quality of the signal received by the signal receiving unit. According to the signal quality, a current map on which the self-propelled mower travels is marked with signal quality performance indicators, thereby obtaining the global signal map carrying signal quality information of respective regions, that is, an RTK working condition map.

For example, while signal positioning data is acquired, the current map is marked with RTK performance indicators in conjunction of visual analysis results of the obstructions. For example, this may be implemented by analyzing errors in RTK positioning data and considering the heights, number, and sizes of the obstructions visually identified. If the RTK positioning data has a relatively large error, that is, the signal quality is relatively low, the target region is marked on the map so that it is convenient for the self-propelled mower to adjust the positioning fusion algorithm or perform the path planning according to the global signal map.

For example, the self-propelled mower adopts the corresponding obstacle avoidance strategies according to the working condition of the self-propelled mower and the RTK performance indicators. For example, at night, the vision sensor may not accurately identify the obstructions, and therefore, the self-propelled mower needs to avoid a region marked as having relatively poor RTK performance. When an RTK working condition is relatively poor, the positioning fusion algorithm may be applied, and a weight of the satellite positioning result is reduced while a weight of other sensor-based positioning data is increased, so as to improve the overall positioning precision and reliability. FIG. 8 is a schematic diagram showing a signal quality determination method configured in the controller of the self-propelled mower according to an example of the present application.

In some examples, the self-propelled mower further includes a memory. The memory is configured to store a global signal map variable generated according to the signal quality of respective regions.

After the global signal map is generated according to the signal quality of respective regions, the global signal map is stored in the memory as variable data. For example, during time periods with relatively high-quality visual information, such as daytime, the global signal map is dynamically adjusted according to image data collected in real time by the self-propelled mower. During time periods with relatively low-quality visual information, such as nighttime, the positioning fusion algorithm is adjusted or the path planning is performed according to the global signal map stored in the memory.

This example has the beneficial effects described below. Based on dual determination based on visual identification and the signal quality, the positioning fusion algorithm is adjusted or the path planning is performed for the self-propelled mower so that the self-propelled mower is guided to perform mowing tasks safely and efficiently. A more robust adjustment is performed on the positioning fusion algorithm according to an RTK working condition map, and a path is adjusted for the self-propelled mower, thereby improving mowing efficiency of the self-propelled mower and the safety of the self-propelled mower.

An example of the present application is another self-propelled mower, which may be combined with the self-propelled mower in the preceding example. FIG.1 is the schematic view of the self-propelled mower. This example is applicable to the scenario in which power supply to multiple sensors of the self-propelled mower is optimized. The power supply to the multiple sensors is optimized through a controller in the self-propelled mower. This apparatus may be implemented in the form of software and/or hardware.

The self-propelled mower includes a body and a traveling wheel assembly. The traveling wheel assembly is configured to support the body. The body of the self-propelled mower refers to a hardware portion for implementing a mowing function, and the traveling wheel assembly refers to components for supporting autonomous travel of the self-propelled mower.

The self-propelled mower further includes multiple sensor assemblies disposed on the body. The multiple sensor assemblies disposed on the body are configured to support autonomous mowing functions of the self-propelled mower, such as a positioning function or a path planning function. A power supply device on the body supplies power to each of the multiple sensor assemblies as demanded, so as to support the sensor assembly in performing a corresponding function.

The self-propelled mower further includes the controller electrically connected to the multiple sensor assemblies respectively. The controller selectively cuts off power supplied to the multiple sensor assemblies. Specifically, the controller determines at least one idle sensor assembly from the multiple sensor assemblies according to a current working state of the self-propelled mower and cuts off power supplied by the power supply device to the idle sensor assembly. The idle sensor assembly refers to an assembly that currently does not support the autonomous mowing function of the self-propelled mower.

In some examples, the self-propelled mower further includes multiple switching elements configured to connect or disconnect electrical connections between the multiple sensor assemblies and the power supply device.

A switching element is provided between the power supply device and each sensor assembly. When the switching element is in an on state, an electrical connection between the sensor assembly corresponding to the switching element and the power supply device is connected. When the switching element is in an off state, the electrical connection between the sensor assembly corresponding to the switching element and the power supply device is disconnected. Specifically, the controller is connected to the multiple switching elements respectively and configured to control the multiple switching elements to selectively cut off power supplied by the power supply device to at least one of the multiple sensor assemblies.

In some examples, the multiple sensor assemblies include at least three of a differential positioning unit, a camera, a laser radar, a radar, a wheel encoder, and an IMU.

In the preceding example, the multiple sensor assemblies include the at least three of the differential positioning unit, the camera, the laser radar, the radar, the wheel encoder, and the IMU, which are configured to perform multi-sensor fusion positioning on the self-propelled mower. In addition, the multiple sensor assemblies may further include devices supporting other functions.

In some examples, the step in which the power supplied by the power supply device to the at least one of the multiple sensor assemblies is selectively cut off includes the step described below.

Whether to cut off power to the differential positioning unit is selected according to a signal quality.

The differential positioning unit is configured to receive a signal sent by a first remote device to obtain external positioning data of the self-propelled mower. The signal quality refers to a quality of the signal sent by the first remote device and received by the differential positioning unit.

Specifically, if the signal quality is less than a preset signal threshold, the power to the differential positioning unit is cut off. For example, if a quality of an RTK signal is less than the preset signal threshold, it is indicated that an RTK working condition in a current environment of the self-propelled mower is relatively poor, and determined external positioning data may have a relatively large error. Therefore, to improve positioning accuracy and avoid using the external positioning data, the power to the differential positioning unit is cut off. This configuration aims to ensure power supply efficiency, avoid supplying power to sensor assemblies that currently contribute less to the self-propelled mower, and improve power saving efficiency, thereby improving endurance of the self-propelled mower.

That is to say, when the working condition is not suitable for RTK positioning, RTK-related sending and receiving sensors may be turned off.

In some examples, after whether to cut off the power to the differential positioning unit is selected according to the signal quality, the method further includes the step described below.

Whether to restore the power to the differential positioning unit is selected according to information from a first other sensor. The first other sensor includes at least one sensor among the multiple sensors other than the differential positioning unit.

If the first other sensor of the self-propelled mower acquires relatively low-quality data, the power to the differential positioning unit is restored to ensure accuracy of a positioning result. For example, if the self-propelled mower currently works at night, the camera acquires limited information, and the power to the differential positioning unit is restored. Alternatively, if the self-propelled mower currently travels on a bumpy road surface, information acquired by the wheel encoder may have some errors, and the power to the differential positioning unit is restored. A specific restoration strategy may be determined according to a positioning fusion strategy and is not limited here. That is, in the case where the inaccurate information is acquired by using another positioning method, the power to the differential positioning unit is restored so that the accuracy of the positioning result is ensured.

In some examples, the step in which the power supplied by the power supply device to the at least one of the multiple sensor assemblies is selectively cut off includes the step described below.

Whether to cut off power to the camera is selected according to visually visible information.

The camera is configured to detect environmental information around the self-propelled mower so that visual positioning data is determined through the environmental information, and the visually visible information refers to the number of environmental feature objects in image data acquired by the camera.

Specifically, if the visually visible information is less than a preset threshold, it is indicated that the number of environmental feature objects is relatively small currently, and positioning performed through the environmental information is erroneous and inaccurate to a certain degree. Accordingly, the power to the camera is cut off. For example, if the self-propelled mower works at night currently, or relatively few feature objects are present in current image data, it is indicated that the environment in which the self-propelled mower is currently located is relatively monotonous, and determined visual positioning data may have a relatively large error. Therefore, to improve the positioning accuracy and avoid using the visual positioning data, the power to the camera is cut off. This configuration aims to ensure the power supply efficiency, avoid supplying the power to the sensor assemblies that currently contribute less to the self-propelled mower, and improve the power saving efficiency, thereby improving the endurance of the self-propelled mower.

That is, when the working condition includes a small number of feature objects and is unfavorable for visual positioning, the vision sensor may be turned off, and the power thereto may be cut off.

In some examples, after whether to cut off the power to the camera is selected according to the visually visible information, the method further includes the step described below.

Whether to restore the power to the camera is selected according to information from a second other sensor. The second other sensor includes at least one sensor among the multiple sensors other than the camera.

If the second other sensor of the self-propelled mower acquires relatively low-quality data, the power to the camera is restored to ensure the accuracy of the positioning result. For example, if the self-propelled mower is currently located in a region where signals are obstructed by obstacles, the differential positioning unit acquires a relatively low-quality signal, and the power to the camera is restored. Alternatively, if the self-propelled mower currently travels on the bumpy road surface, the information acquired by the wheel encoder may have the errors, and the power to the camera is restored. A specific restoration strategy may be determined according to the positioning fusion strategy and is not limited here. That is, in the case where the inaccurate information is acquired by using another positioning method, the power to the camera is restored so that the accuracy of the positioning result is ensured.

In some examples, the step in which the power supplied by the power supply device to the at least one of the multiple sensor assemblies is selectively cut off includes the step described below.

At least one target sensor assembly is selected from the multiple sensor assemblies according to a remaining battery level of the power supply device and power of the multiple sensor assemblies, and power to the at least one target sensor assembly is cut off.

If the remaining battery level of the power supply device is less than a first preset battery level threshold, it is indicated that the power supply device is currently at a relatively low battery level but does not reach a recharging standard, where the first preset battery level threshold is greater than a preset battery level threshold in the next example. Accordingly, the at least one high-power target sensor assembly is selected from the multiple sensor assemblies according to the power of the multiple sensor assemblies, and the power to the at least one high-power target sensor assembly is cut off so that subsequent endurance of the self-propelled mower is improved.

For example, if the remaining battery level of the power supply device is less than 50%, the multiple sensor assemblies are sorted in descending order according to the power of the multiple sensor assemblies. In addition, after the power to the target sensor assemblies ranked at the top is sequentially cut off according to the sorting order, the endurance of the power supply device is calculated accordingly. Until the endurance reaches a preset standard, the last target sensor assembly to which power is cut off is determined.

For example, when it is monitored that the self-propelled mower remains in a preset region range during a preset time period, it is indicated that the self-propelled mower is in a trapped state. Accordingly, the self-propelled mower enters a low power consumption mode, and power to sensors such as the camera, the differential positioning unit, and the odometer is cut off.

In some examples, the step in which the power supplied by the power supply device to the at least one of the multiple sensor assemblies is selectively cut off includes the step described below.

If the remaining battery level of the power supply device is less than a preset battery level threshold, at least one sensor assembly related to path planning is selected from the multiple sensor assemblies according to a path planning requirement, and power to a sensor assembly that is not related to the path planning is cut off.

If the remaining battery level of the power supply device is relatively low, and the self-propelled mower needs to be recharged, to ensure that the self-propelled mower is smoothly recharged, the power to the sensor assembly that is not related to the path planning is cut off, and power is supplied only to a sensor assembly related to the path planning required in a recharging process.

For example, when the self-propelled mower cannot continue working due to a low battery level and needs to be recharged, the power to the unnecessary sensor assemblies may be cut off according to characteristics of a planned path, thereby ensuring that the remaining battery level can support the self-propelled mower in returning to a charging pile.

In some examples, the step in which the power supplied by the power supply device to the at least one of the multiple sensor assemblies is selectively cut off includes the step described below.

Whether to cut off power to the IMU is selected according to road surface bump information.

The road surface bump information refers to state information of a road surface on which the self-propelled mower currently travels. The road surface bump information may be determined according to the image data acquired by the vision sensor deployed on the body of the self-propelled mower or may be determined according to vibration data acquired by a vibration sensor deployed on the body of the self-propelled mower. Alternatively, the road surface bump information may be determined in other manners, which are not limited here.

If it is determined, according to the road surface bump information, that a bumpy degree of the road surface on which the self-propelled mower currently travels exceeds a threshold, the power to the IMU is cut off since reduced accuracy of the IMU on the bumpy road surface results in less reliable data acquired by the IMU.

This example has the beneficial effects described below. Different working conditions and tasks of the self-propelled mower are monitored, and power is supplied to different sensor assemblies according to the monitored different working conditions. Thus, the self-propelled mower can complete mowing tasks more efficiently for a long time, thereby achieving power saving and endurance functions of the self-propelled mower. The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A self-propelled mower, comprising:
a body;
a traveling wheel assembly configured to support the body;
a signal receiving unit configured to receive a signal sent by a first remote device to obtain external positioning data of the self-propelled mower;
a first sensor assembly configured to detect environmental information around the self-propelled mower;
a second sensor assembly configured to detect a motion state of the self-propelled mower; and
a fusion positioning unit disposed on the body and electrically connected to the signal receiving unit, the first sensor assembly, and the second sensor assembly, wherein the fusion positioning unit is configured to:
position the self-propelled mower according to the environmental information and fuse the external positioning data to generate a first positioning result;
position the self-propelled mower according to the motion state and fuse the external positioning data to generate a second positioning result; and
fuse the first positioning result and the second positioning result to generate a final positioning result.

2. The self-propelled mower according to claim 1, wherein the signal receiving unit is a global navigation satellite system (GNSS) receiver.

3. The self-propelled mower according to claim 2, wherein the signal receiving unit is a differential positioning unit, and the external positioning data is a differential positioning result of the self-propelled mower.

4. The self-propelled mower according to claim 1, wherein the first sensor assembly comprises a camera assembly.

5. The self-propelled mower according to claim 1, wherein positioning the self-propelled mower according to the environmental information comprises:
positioning the self-propelled mower according to the environmental information based on visual simultaneous localization and mapping (VSLAM).

6. The self-propelled mower according to claim 1, wherein the second sensor assembly comprises at least a wheel encoder.

7. The self-propelled mower according to claim 6, wherein the second sensor assembly further comprises an inertial measurement unit (IMU).

8. The self-propelled mower according to claim 1, wherein positioning the self-propelled mower according to the environmental information and fusing the external positioning data to generate the first positioning result comprises:
positioning the self-propelled mower according to the environmental information and fusing the external positioning data through Kalman filtering to generate the first positioning result.

9. The self-propelled mower according to claim 1, wherein positioning the self-propelled mower according to the motion state and fusing the external positioning data to generate the second positioning result comprises:
positioning the self-propelled mower according to the motion state and fusing the external positioning data through Kalman filtering to generate the second positioning result.

10. The self-propelled mower according to claim 1, wherein fusing the first positioning result and the second positioning result to generate the final positioning result comprises:
adjusting a fusion weight of the first positioning result and a fusion weight of the second positioning result according to a visual positioning quality and/or a quality of the signal; and
fusing the first positioning result and the second positioning result according to the fusion weight of the first positioning result and the fusion weight of the second positioning result to generate the final positioning result.

11. A self-propelled mower, comprising:
a body;
a traveling wheel assembly configured to support the body;
a wireless communication module configured to perform communication with a second remote device, comprising receiving a control signal sent by the second remote device;
a vision sensor configured to acquire image data around the self-propelled mower; and
a controller, wherein the controller is electrically connected to the wireless communication module and the vision sensor respectively to acquire the control signal and the image data;
wherein the controller is configured to:
calculate a movement route indicated by the control signal, control the traveling wheel assembly to cause the self-propelled mower to travel along the movement route, and store coordinate information of the movement route;
identify a boundary between a grass region and a non-grass region from the image data based on deep learning, control the traveling wheel assembly to cause the self-propelled mower to travel along the boundary, and store coordinate information of the boundary; and
integrate the coordinate information of the movement route and the coordinate information of the boundary to generate a working region boundary of the self-propelled mower.

12. The self-propelled mower according to claim 11, wherein the second remote device is a mobile terminal.

13. The self-propelled mower according to claim 11, wherein the wireless communication module comprises at least one of the following: Bluetooth, wireless fidelity (Wi-Fi), or a cellular signal.

14. The self-propelled mower according to claim 11, wherein the vision sensor comprises a binocular camera.

15. The self-propelled mower according to claim 11, further comprising a memory, wherein the memory is configured to store the coordinate information of the movement route, the coordinate information of the boundary, and the working region boundary.

16. The self-propelled mower according to claim 11, wherein the self-propelled mower sends the working region boundary to the second remote device through the wireless communication module.

17. The self-propelled mower according to claim 11, wherein integrating the coordinate information of the movement route and the coordinate information of the boundary comprises:
performing smoothing and gap filling on the coordinate information of the movement route and the coordinate information of the boundary.

18. The self-propelled mower according to claim 11, wherein integrating the coordinate information of the movement route and the coordinate information of the boundary to generate the working region boundary of the self-propelled mower comprises:
in response to the coordinate information of the boundary being located in a preset region, and the preset region comprises the coordinate information of the movement route, generating the working region boundary of the self-propelled mower in the preset region based on the coordinate information of the boundary and the coordinate information of the movement route.

19. The self-propelled mower according to claim 11, further comprising a differential positioning unit configured to acquire the coordinate information.

20. A boundary establishment method for a self-propelled mower, wherein the self-propelled mower comprises a wireless communication module and a vision sensor, and the boundary establishment method comprises:
receiving, through the wireless communication module, a control signal sent by a second remote device;
acquiring image data around the self-propelled mower through the vision sensor;
calculating a movement route indicated by the control signal, controlling the self-propelled mower to travel along the movement route, and storing coordinate information of the movement route;
when the control signal is absent, identifying a boundary between a grass region and a non-grass region from the image data, controlling the self-propelled mower to travel along the boundary, and storing coordinate information of the boundary; and
integrating the coordinate information of the movement route and the coordinate information of the boundary to generate a working region boundary of the self-propelled mower.

21. A self-propelled mower, comprising:
a body;
a traveling wheel assembly configured to support the body;
a signal receiving unit configured to receive a signal sent by a first remote device, wherein the signal is used for determining a position of the self-propelled mower;
a vision sensor configured to acquire image data around the self-propelled mower; and
a controller electrically connected to the signal receiving unit and the vision sensor respectively;
wherein the controller is configured to:
receive the image data from the vision sensor;
determine a signal quality of respective regions from the image data through a target detection algorithm; and
adjust a positioning fusion algorithm or perform path planning according to the signal quality of respective regions.

22. The self-propelled mower according to claim 21, wherein the signal receiving unit is a global navigation satellite system (GNSS) receiver.

23. The self-propelled mower according to claim 22, wherein the signal receiving unit is a differential positioning unit, and the position of the self-propelled mower is a differential positioning result of the self-propelled mower.

24. The self-propelled mower according to claim 21, wherein the vision sensor comprises a binocular camera.

25. The self-propelled mower according to claim 21, wherein determining the signal quality of respective regions from the image data through the target detection algorithm comprises:
detecting obstructions through the target detection algorithm, and determining the signal quality of respective regions from the image data according to a number, volumes, and/or heights of the obstructions.

26. The self-propelled mower according to claim 21, wherein adjusting the positioning fusion algorithm according to the signal quality of respective regions comprises:
in response to a signal quality of a target region being less than a preset signal threshold, reducing a fusion weight of a satellite positioning method in the positioning fusion algorithm.

27. The self-propelled mower according to claim 26, wherein the positioning fusion algorithm further comprises a positioning method using data from at least one of vision, a laser radar, a radar, a wheel encoder, or an inertial measurement unit (IMU).

28. The self-propelled mower according to claim 21, wherein performing the path planning according to the signal quality of respective regions comprises:
in response to the self-propelled mower entering a target region, and a signal quality of the target region being less than a preset signal threshold, adjusting a path and controlling the self-propelled mower to leave the target region and enter another region whose signal quality is greater than or equal to the preset signal threshold.

29. The self-propelled mower according to claim 21, wherein adjusting the positioning fusion algorithm or performing the path planning according to the signal quality of respective regions comprises:
generating a global signal map according to the signal quality of respective regions; and
adjusting the positioning fusion algorithm or performing the path planning according to the global signal map.

30. The self-propelled mower according to claim 29, further comprising a memory, wherein the memory is configured to store a global signal map variable generated according to the signal quality of respective regions.

31. A self-propelled mower, comprising:
a body;
a traveling wheel assembly configured to support the body;
a plurality of sensor assemblies disposed on the body;
a controller electrically connected to the plurality of sensor assemblies respectively; and
a power supply device disposed on the body and configured to supply power to the controller and the plurality of sensor assemblies;
wherein the controller is configured to:
selectively cut off power supplied by the power supply device to at least one of the plurality of sensor assemblies.

32. The self-propelled mower according to claim 31, further comprising a plurality of switching elements configured to connect or disconnect electrical connections between the plurality of sensor assemblies and the power supply device.

33. The self-propelled mower according to claim 31, wherein the plurality of sensor assemblies comprise at least three of a differential positioning unit, a camera, a laser radar, a radar, a wheel encoder, and, or an inertial measurement unit (IMU).

34. The self-propelled mower according to claim 31, wherein selectively cutting off the power supplied by the power supply device to the at least one of the plurality of sensor assemblies comprises:
selecting, according to a signal quality, whether to cut off power to a differential positioning unit.

35. The self-propelled mower according to claim 34, wherein after selecting, according to the signal quality, whether to cut off the power to the differential positioning unit, further comprises:
selecting, according to information from a first other sensor, whether to restore the power to the differential positioning unit, wherein the first other sensor comprises at least one sensor among a plurality of sensors other than the differential positioning unit.

36. The self-propelled mower according to claim 33, wherein selectively cutting off the power supplied by the power supply device to the at least one of the plurality of sensor assemblies comprises:
selecting, according to visually visible information, whether to cut off power to the camera.

37. The self-propelled mower according to claim 36, wherein after selecting, according to the visually visible information, whether to cut off the power to the camera, further comprises:
selecting, according to information from a second other sensor, whether to restore the power to the camera, wherein the second other sensor comprises at least one sensor among a plurality of sensors other than the camera.

38. The self-propelled mower according to claim 31, wherein selectively cutting off the power supplied by the power supply device to the at least one of the plurality of sensor assemblies comprises:
selecting at least one target sensor assembly from the plurality of sensor assemblies according to a remaining battery level of the power supply device and power of the plurality of sensor assemblies and cutting off power to the at least one target sensor assembly.

39. The self-propelled mower according to claim 31, wherein selectively cutting off the power supplied by the power supply device to the at least one of the plurality of sensor assemblies comprises:
in response to the remaining battery level of the power supply device being less than a preset battery level threshold, selecting, according to a path planning requirement, at least one sensor assembly related to path planning from the plurality of sensor assemblies, and cutting off power to a sensor assembly that is not related to the path planning.

40. The self-propelled mower according to claim 33, wherein selectively cutting off the power supplied by the power supply device to the at least one of the plurality of sensor assemblies comprises:
selecting, according to road surface bump information, whether to cut off power to the IMU.
